# EUROPÄISCHE PATENTANMELDUNG

(11) **EP 1 592 266 A2**
(43) Veröffentlichungstag der Anmeldung: **02.11.2005**
(21) Anmeldenummer: 05003610.2
(22) Anmeldetag: 19.02.2005
(51) Int. Cl.: H04Q 3/00, H04Q 3/78, H04M 3/58

(54) **Verfahren zum Weitervermitteln eines Rufes in einem digitalen vermittelnden Netz**

(30) Priorität: 29.04.2004 DE 102004021271
(71) Anmelder: DB Telematik GmbH, 65760 Eschborn (DE)
(72) Erfinder: Adami, Jörg, 63843 Niedernberg (DE); Egger, Kurt, 21337 Lüneburg (DE)
(74) Vertreter: Zinken-Sommer, Rainer

(57) **Zusammenfassung**

Die Erfindung betrifft ein Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C).

Dieses ermöglicht es, dass die für die Behandlung des eingehenden Rufes bei der empfangenden Ziel-Senke (C) signifikanten Daten trotz des zwischengeschalteten Vermittlungsvorganges erhalten bleiben..

Hierzu wird durch die angerufene erste Senke (B) nach Eingang des vom Ursprung (A) initiierten Rufes eine manuelle Bedienhandlung (ECT; Explicit Call Transfer) zum Vermitteln an eine zweite Ziel-Senke (C) durchgeführt, wodurch der vom Ursprung bei der ersten Senke eingegangene Ruf in einer Vermittlungsstelle auf Halten gelegt sowie ein Ruf von der ersten zur zweiten Ziel-Senke unter Verwendung von gemäss ePFN-Standard (enhanced Presentation Functional Numbering) kodierter Informationselemente aufgebaut wird.

## Beschreibung

Die Erfindung betrifft ein Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C).

Seit einigen Jahren rüsten die Betreiber europäischer Eisenbahnnetze ihre vorhandenen anlogen Anlagen für Zug- und Rangierfunk auf ein digitales System um, welches zur Erzielung von Vereinheitlichungs- und Kosteneinspareffekten auf dem bekannten GSM-Standard basiert. Da der Eisenbahnbetrieb jedoch zusätzliche Anforderungen hinsichtlich der in der Funkkommunikation notwendigen Funktionalitäten mit sich bringt, welche in herkömmlichen öffentlichen digitalen Mobilfunknetzen unbekannt sind beziehungsweise keine Rolle spielen, wurde der GSM-Standard für den Einsatz im Eisenbahn-Betrieb modifiziert. Diese funktionale Erweiterung ist als GSM-R-Standard bekannt und umfasst im wesentlichen Merkmale wie beispielsweise funktionale Adressierungen, Gruppenrufe und eine prioritätsgesteuerte Behandlung der im Funknetz anliegenden Rufe.
Eine wesentliche Anforderung an GSM-R-Mobilfunknetze besteht darin, eine Vielzahl von auf einem Streckennetz verkehrenden Zügen mit den jeweils für deren aktuellen Fahrort zuständigen Fahrdienstleitern oder Disponenten zu verbinden. Im Notfall müssen diese Verbindungen mit extrem kurzen Verbindungsaufbauzeiten realisiert werden.

Ein technisches Problem besteht darin, dass die verwendete Technologie nicht mit ausschliesslicher Sicherheit garantieren kann, dass ein aus einem räumlich bewegten Zug heraus aktivierter und in funktionaler Weise an eine für diesen aktuellen Fahrort zuständige ortsfeste Instanz adressierter Ruf tatsächlich an dieses Ziel geleitet wird. Es wird deshalb notwendig sein, dass das GSM-R-Netz für derartige Einzelfälle eine leistungsfähige Vermittlungsfunktion bereitstellt, mittels der bei einer ersten Senke eingehende Rufe an eine zweite Ziel-Senke weitergereicht werden können.

Entsprechend dem Stand der Technik wird ein bei einer ersten Senke eingehender Ruf zunächst in einer Vermittlungsstelle auf Halten gelegt und sodann ein neuer Ruf von der ersten zur zweiten Senke aufgebaut. Es ist jedoch von grossem Nachteil, dass der empfangenden zweiten Senke nur die Identität der weitervermittelnden ersten Senke und nicht die Identität des eigentlich absendenden Ursprungs-Teilnehmers übermittelt werden kann. Ebenso kann der Rufaufbau von der ersten zur zweiten Senke nicht mit der selben Priorität wie der vom Ursprung eigentlich ausgesandte Ruf durch das Funknetz geleitet werden. Somit fehlen der empfangenden zweiten Ziel-Senke wesentliche Informationen, die für die Behandlung des eingehenden Rufes oftmals von grosser Bedeutung sein könnten. Insbesondere besteht die Gefahr, dass Rufe, die mit zunächst höchster Priorität vom Ursprung abgesendet wurden (beispielsweise Notrufe), nur mit einer für normale Telefonie-Zwecke vorgesehenen niedrigeren Priorität von der ersten zur zweiten Ziel-Senke weitervermittelt werden. Damit würde der vermittelnde Ruf in einer Fülle von bei der zweiten Senke eventuell gleichzeitig auflaufenden weiteren Rufen beziehungsweise Informationen nicht die erforderliche Beachtung finden. Ergänzend und erschwerend kommt hinzu, dass die entgegennehmende zweite Ziel-Senke zunächst keine Hinweise auf den Ursprung als den eigentlichen Absender beziehungsweise Auslöser dieses Rufes erhält.

Der Erfindung liegt deshalb die Aufgabe zugrunde, ein Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C) bereit zu stellen, mittels dem die für die Behandlung des eingehenden Rufes bei der empfangenden Ziel-Senke (C) signifikanten Daten trotz des zwischengeschalteten Vermittlungsvorganges erhalten bleiben.

Diese Aufgabe wird in Verbindung mit dem Oberbegriff des Patentanspruches 1 erfindungsgemäss dadurch gelöst, dass durch die angerufene erste Senke (B) nach Eingang des vom Ursprung (A) initiierten Rufes eine manuelle Bedienhandlung (ECT; Explicit Call Transfer) zum Vermitteln an eine zweite Ziel-Senke (C) durchgeführt wird, wodurch der vom Ursprung bei der ersten Senke eingegangene Ruf in einer Vermittlungsstelle auf Halten gelegt sowie ein Ruf von der ersten zur zweiten Ziel-Senke unter Verwendung von gemäss ePFN-Standard (enhanced Presentation Functional Numbering) kodierter Informationselemente aufgebaut wird. Damit wird in vorteilhafter Weise erreicht, dass die vom Ursprung an die erste Senke übermittelten Set-Up-Informationen beziehungsweise Signalisierungsinformationen durch die Vermittlungshandlung nicht verloren gehen, sondern für den die Weitervermittlung einleitenden Ruf von der ersten zur zweiten Ziel-Senke genutzt werden können. Damit wird wirkungsvoll vermieden, dass Rufe, die im Mobilfunknetz mit hoher Priorität eingestuft sind, durch eine mehr oder weniger zufällige Zwischenschaltung einer niedrig priorisierten vermittelnden Senke an Verdrängungsfähigkeit gegenüber anderen Rufen, die allesamt um knapp bemessene Netzwerk-Ressourcen konkurrieren, verlieren.

Eine Ausgestaltung des erfinderischen Grundgedankens sieht vor, dass ein beim Rufaufbau vom Ursprung (A) an die erste Senke (B) übertragenes Datenelement zur Identifizierung des Ursprungs in einem Zwischenspeicher der ersten Senke gehalten und als Signalisierungsinformation in den von der ersten (B) zur zweiten Ziel-Senke (C) aufgebauten Ruf integriert wird. Somit kann die empfangende Ziel-Senke (C) eindeutig die ursprünglich rufende Instanz (A) identifizieren und es können mögliche Missverständnisse, die auf einer fälschlicherweisen Identifizierung der vermittelnden ersten Senke (B) als Ruf-initiierender Instanz beruhen könnten, vermieden werden.
Es ist in diesem Zusammenhang besonders sinnvoll, wenn auch ein Datenelement zur Identifizierung der ersten Senke (B) als Signalisierungsinformation in den von der ersten zur zweiten Ziel-Senke (C) aufgebauten Ruf integriert wird. Dies hat grosse Bedeutung, da die Signalisierungsinformation im Rahmen bestimmter Anwendungen auch automatische Prozesse auf den Bedienterminals auslösen muß. Laut EIRENE-Spezifikation ist beispielsweise ein Ruf der Priorität "0" automatisch auf das Bediengerät zu schalten und parallel dazu eine gut sichtbare Warnung (optisch und akustisch) zu starten. Außerdem ist der Ruf sofort innerhalb von zwei Sekunden anzuzeigen und eine direkte Sprachdurchschaltung zu erwirken, damit Notrufdurchsagen und Befehle direkt und ohne zusätzliche Bedienhandlung gehört werden können. Weiterhin ist durch die Erkennung des Ruftyps eine Freischaltung von Bedienungsalternativen möglich. Im Falle eines ankommenden Notrufes ist die zweite Ziel-Senke (C) aufgefordert, bei einem eventullen Sprechwunsch eine unmute ("nicht stumm")-Kennung in Richtung Netz zu senden und bei Ruhe eine mute ("stumm")-Sequenz zu senden. Dies erhöht zum einen die Sprechdisziplin der Teilnehmer, ermöglicht zum anderen aber auch die Vermeidung von Echos durch angeschlossene Konferenzbrücken.
Es ist in diesem Zusammenhang erfindungsgemäss vorgesehen, dass zur Identifizierung des Ursprungs (A) und / oder der ersten Senke (B) Datenelemente, die CLI (Calling Line Identity) und / oder FN (Functional Numbering) beinhalten, übertragen werden. Die CLI dient der zweiten Ziel-Senke (C) zur eineindeutigen Identifizierung des Ursprungs (A). Somit kann beispielsweise der zuständige Fahrdienstleiter eines Streckenbereichs sofort erkennen, in welchem räumlichen Abschnitt des Streckenbereiches der Notruf entstanden ist, und seine weiteren Bedienhandlungen (z.B. weitere Züge in diesem Bereich warnen) danach ausrichten. Mittels der funktionalen Nummerierung kann der zweiten Ziel-Senke (C) des weiteren mitgeteilt werden, welche funktionale Einheit /Identität innerhalb eines Eisenbahnnetzes den Ruf ursprünglich abgesetzt bzw. vermittelt hat. Jedes Bedienpersonal, aber auch Züge und Triebfahrzeuge haben neben der immer vorhandenen CLI eine eindeutige funktionale Nummer, so dass der Empfänger die rufende Identität sofort auch ohne Auswertung der CLI erkennen kann.

Erfindungsgemäss ist es von besonderer Bedeutung, dass ein beim Rufaufbau vom Ursprung (A) an die erste Senke (B) übertragenes Datenelement zur Kennzeichnung der Priorität des vom Ursprung (A) abgesetzten Rufes in einem Zwischenspeicher der ersten Senke gehalten und als Signalisierungsinformation in den von der ersten Senke (B) zur zweiten Ziel-Senke (C) aufgebauten Ruf integriert wird. Auf diese Weise wird die Priorität des bei der vermittelnden Instanz (B) eingehenden Rufes auch als Priorität für den für eine Weitervermittlung dieses Rufes erforderlichen Rufaufbau von der ersten zur zweiten Senke beibehalten.

Es ist schliesslich weiterhin vorgesehen, dass die an die zweite Ziel-Senke (Teilnehmer C) übermittelten Datenelemente zur Identifizierung von Ursprung (A) und / oder erster Senke (B) sowie zur Kennzeichnung der Priorität des vom Ursprung (A) abgesetzten Rufes für eine Bereitstellung von an diesen Datenelementen orientierten Bedienfunktionen an einem der zweiten Ziel-Senke (C) zugeordneten Endgerät verwendet werden. Ein den Ruf entgegennehmender Bediener der Ziel-Senke (C) kann somit erkennen, dass es sich nicht um einen beliebigen Standard-Ruf von erster zu zweiter Senke, sondern tatsächlich um einen von einem ersten Ursprung ausgesendeten und mit abweichender Priorität ausgestatteten Ruf handelt. Basierend auf dieser Erkenntnis kann der Bediener seine weiteren Aktionen zur Behandlung dieses eingehenden Rufes entsprechend anpassen.

Weitere Einzelheiten der Erfindung werden in nachfolgendem Ausführungsbeispiel anhand von Zeichnungen erläutert. Hierbei zeigen:
- Figur 1:: Prinzipdarstellung des Verfahrens zur Weitervermittlung eines Rufes von einer ersten Senke (B) an eine zweite Ziel-Senke (C) nach dem Stand der Technik
- Figur 2:: Prinzipdarstellung des erfindungsgemässen Verfahrens zur Weitervermittlung eines Rufes von einer ersten Senke (B) an eine zweite Ziel-Senke (C)

Teilnehmer A - beispielsweise der Triebfahrzeugführer eines zwischen den Bahnhöfen B-Dorf und C-Stadt verkehrenden Zuges - initiert einen GSM-R-Notruf (Gruppenruf, betrieblicher Notruf) mit Hilfe einer Notruftaste, wobei es unerheblich ist, ob diese Rufauslösung im Mobil- oder Festnetz erfolgt. Das Netz leitet diesen Notruf an die zuständigen Stellen bzw. Teilnehmer oder Ziele weiter, hier beispielsweise den örtlich zuständigen Fahrdienstleiter. Aufgrund von allfälligen Beschränkungen bei den Ressourcen des Netzwerkes können nur endlich viele Teilnehmer an diesem Gruppenruf teilnehmen. Erscheint der Notruf bei einem Teilnehmer B (= Fahrdienstleiter in B-Dorf), der sich für diesen Notruf nicht zuständig fühlt, jedoch Kenntnis von der tatsächlich zuständigen Instanz (Teilnehmer C = Fahrdienstleiter in C-Stadt) hat, so wird er dieses Notrufgespräch dorthin weiter vermitteln.

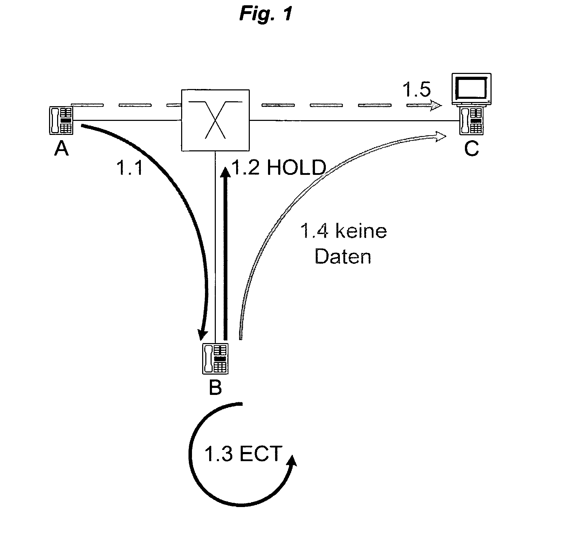

Figur 1 stellt die Weitervermittlung anhand der aus dem Stand der Technik bekannten Lösungsmöglichkeit dar. Der Fahrdienstleiter B-Dorf muss den mit dem Triebfahrzeugführer (Teilnehmer A) bestehenden Ruf in der Vermittlungsstelle auf Halten legen, damit er sodann einen Anruf beim zuständigen Fahrdienstleiter C-Stadt zum Einleiten der Ruf-Vermittlung tätigen kann. Allerdings wird dieser Ruf nur mit einer systembedingt niedrigeren Priorität ("kein Notruf") behandelt und durchgeschaltet. Ebenso bekommt der Fahrdienstleiter C-Stadt im Bedienfeld seines Endgerätes nur angezeigt, dass der Fahrdienstleiter B-Dorf einen Ruf zu ihm aufbauen möchte. Aus derartigen Informationen ist es für den entgegennehmenden Fahrdienstleiter C-Stadt nicht möglich, die Dringlichkeit eines Notrufes und die Identität des diesen Notruf tatsächlich initiierenden Triebfahrzeugführers zu erkennen. Je nach betrieblicher Situation kann dies dazu führen, dass der Fahrdienstleiter C-Stadt erst andere Handlungen vorzieht bis er das anliegende Gespräch entgegennimmt.

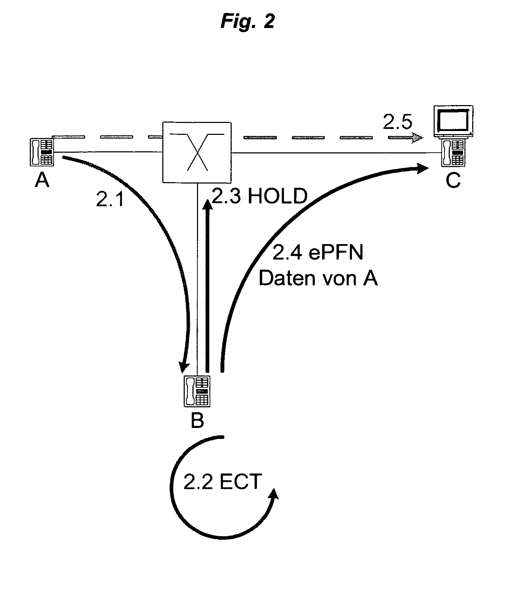

Figur 2 hingegen beschreibt das erfindungsgemässe Vorgehen, bei dem sichergestellt wird, dass der Fahrdienstleiter C-Stadt genau die gleichen Informationen übermittelt bekommt wie zuvor bereits der den Notruf vermittelnde Fahrdienstleiter B-Dorf. Zu diesem Zweck speichert zunächst das dem Fahrdienstleiter B-Dorf zugeordnete Endgerät die Signalisierungsinformationen des vom Triebfahrzeugführer (Teilnehmer A) eingehenden Rufes in an sich bekannter Weise für die Dauer des Bestehens des Rufes zwischen Triebfahrzeugführer und Fahrdienstleiter B-Dorf in einem flüchtigen Zwischenspeicher. Sobald der Fahrdienstleiter B-Dorf die Notwendigkeit eines Weitervermittelns des Rufes vom Triebfahrzeugführer an den Fahrdienstleiter C-Stadt erkennt, löst er durch eine manuelle Bedienhandlung das Anlegen eines Speicherabbildes der in der Signalisierungsinformation des Rufes vom Triebfahrzeugführer A enthaltenen Datenelemente aus. Diese manuelle Bedienhandlung kann beispielsweise darin bestehen, dass eine speziell konfigurierte Taste am Endgerät des Fahrdienstleiters B-Dorf gedrückt wird. Erst nach dem Anlegen des Speicherabbildes wird nun der vom Triebfahrzeugführer eingegangene Ruf in der Vermittlungsanlage auf Halten gelegt. Beim nachfolgenden Rufaufbau vom Fahrdienstleiter B-Dorf zum Fahrdienstleiter C-Stadt werden nun diejenigen Daten aus dem Speicherabbild, die für den gerufenen Fahrdienstleiter C-Stadt für die Beurteilung des eingehenden Rufes relevant sind, in die Setup-Informationen des Rufes integriert. Diese Informationen umfassen beispielsweise die Identität des den Ruf absetzenden Triebfahrzeugführer sowie die Kennzeichnung dieses Rufes als Notruf mit höchster Priorität. Die entsprechenden Datenelemente werden zum Zwecke der Integration als Informationselemente gemäss dem ePFN-Standard (enhanced Presentation Functional Numbering) codiert. Dieser Standard wurde ursprünglich dazu geschaffen, zusätzlich zu den aus dem Mobilfunk bekannten Setup-Informationen für den einfachen Aufbau des Rufes sowie Angaben zu Netzwerkressourcen weitere Informationselemente zur Position (GPS-Koordinaten) des rufenden Teilnehmers zu übertragen. Der Ruf wird sodann aufgebaut und der Fahrdienstleiter C-Stadt, der das eigentliche vom Triebfahrzeugführer angesprochene betriebliche Ziel des Notrufes darstellt, bekommt nun im Zuge des Rufaufbaus die Priorität und die Rufdaten des Notrufes auf seinem Endgerät angezeigt und somit dann auch bevorzugt entgegennehmen.

### Bezugszeichenliste:

- A: Ursprung; Teilnehmer "Triebfahrzeugführer"
- B: erste Ziel-Senke; Teilnehmer "Fahrdienstleiter B-Dorf"
- C: zweite Ziel-Senke; Teilnehmer "Fahrdienstleiter C-Stadt"
- D: Vermittlungsstation
- 1.1: Ruf vom Ursprung an erste Ziel-Senke
- 1.2: Halten des Rufes vom Ursprung in Vermittlungsstation
- 1.3: Initiierung ECT
- 1.4: Ruf von erster zu zweiter Ziel-Senke
- 1.5: Verbinden von Ursprung mit zweiter Ziel-Senke
- 2.1: Ruf vom Ursprung an erste Ziel-Senke
- 2.2: Initiierung ECT
- 2.3: Halten des Rufes vom Ursprung in Vermittlungsstation
- 2.4: Ruf von erster zu zweiter Ziel-Senke mit Übertragung Informationsdaten gemäss ePFN
- 2.5: Verbinden von Ursprung mit zweiter Ziel-Senke

## Patentansprüche

1. Verfahren zum Weitervermitteln eines von einem Ursprung (Teilnehmer A) in einem digitalen, vermittelnden Netz abgesetzten Rufes von einer angerufenen ersten Senke (Teilnehmer B) an eine zweite Ziel-Senke (Teilnehmer C),
**dadurch gekennzeichnet,**
**dass** durch die angerufene erste Senke (B) nach Eingang des vom Ursprung (A) initiierten Rufes eine manuelle Bedienhandlung (ECT; Explicit Call Transfer) zum Vermitteln an eine zweite Ziel-Senke (C) durchgeführt wird, wodurch der vom Ursprung bei der ersten Senke eingegangene Ruf in einer Vermittlungsstelle auf Halten gelegt sowie ein Ruf von der ersten zur zweiten Ziel-Senke unter Verwendung von gemäss ePFN-Standard (enhanced Presentation Functional Numbering) kodierter Informationselemente aufgebaut wird.

2. Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C) nach Anspruch 1, **dadurch gekennzeichnet, dass** ein beim Rufaufbau vom Ursprung (A) an die erste Senke (B) übertragenes Datenelement zur Identifizierung des Ursprungs in einem Zwischenspeicher der ersten Senke gehalten und als Signalisierungsinformation in den von der ersten (B) zur zweiten Ziel-Senke (C) aufgebauten Ruf integriert wird.

3. Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C) nach einem der Ansprüche 1 oder 2, **dadurch gekennzeichnet, dass** ein Datenelement zur Identifizierung der ersten Senke (B) als Signalisierungsinformation in den von der ersten zur zweiten Ziel-Senke (C) aufgebauten Ruf integriert wird.

4. Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C) nach einem der Ansprüche 1 bis 3, **dadurch gekennzeichnet, dass** zur Identifizierung des Ursprungs (A) und / oder der ersten Senke (B) Datenelemente, die CLI (Calling Line Identity) und / oder FN (Functional Numbering) beinhalten, übertragen werden.

5. Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C) nach einem der Ansprüche 1 bis 4, **dadurch gekennzeichnet, dass** ein beim Rufaufbau vom Ursprung (A) an die erste Senke (B) übertragenes Datenelement zur Kennzeichnung der Priorität des vom Ursprung (A) abgesetzten Rufes in einem Zwischenspeicher der ersten Senke gehalten und als Signalisierungsinformation in den von der ersten Senke (B) zur zweiten Ziel-Senke (C) aufgebauten Ruf integriert wird.

6. Verfahren zum Weitervermitteln eines von einem Ursprung (Teilnehmer A) in einem digitalen vermittelnden Netz abgesetzten Rufes von einer angerufenen ersten Senke (Teilnehmer B) an eine zweite Ziel-Senke (Teilnehmer C) nach einem der Ansprüche 1 bis 5, **dadurch gekennzeichnet, dass** die an die zweite Ziel-Senke (Teilnehmer C) übermittelten Datenelemente zur Identifizierung von Ursprung (A) und / oder erster Senke (B) sowie zur Kennzeichnung der Priorität des vom Ursprung (A) abgesetzten Rufes für eine Bereitstellung von an diesen Datenelementen orientierten Bedienfunktionen an einem der zweiten Ziel-Senke (C) zugeordneten Endgerät verwendet werden.
